# EUROPEAN PATENT APPLICATION

(11) **EP 1 168 774 A2**
(43) Date of publication of application: **02.01.2002**
(21) Application number: 01304651.1
(22) Date of filing: 25.05.2001
(51) Int. Cl.: H04M 1/02

(54) **A housing assembly**

(30) Priority: 30.06.2000 GB 0016157
(71) Applicant: NOKIA MOBILE PHONES LTD., 02150 Espoo (FI)
(72) Inventor: Johnson, Keith, North Ascot, Berkshire SL5 8JX (GB)
(74) Representative: Read, Matthew Charles

(57) **Abstract**

A housing assembly for an electronic apparatus and in particular a mobile telephone is disclosed. The assembly includes two housing portions (21,23) for connection to each other and a release member (34) positionable between said portions (21,23), the release member (34) having a cam surface (38) thereon such that rotation of the release member (34) urges said housing portions (21,23) apart.

## Description

The present invention relates to a housing assembly for an electronic apparatus and, in particular, to a housing assembly for a mobile telephone.

A conventional mobile telephone generally comprises a housing including a front and a rear casing that are attached to each other using screws. Alternatively, one part may have integrally moulded clips that co-operate with corresponding recesses in the other part to hold them together. In addition, one part of the housing may also include a cover attached to its outer surface which, together with a recess in the housing, forms an acoustic duct for the transmission of sound from a transducer mounted in the housing to the outside. The cover also serves to conceal the screw holding the front and rear casing together and/or the RF test point.

The cover also enables the telephone manufacturer to mark the product with the required logo or trademark depending on where or by whom the telephone is being sold, without having to replace the entire front and/or rear casing which would be more expensive to manufacture with the desired logo or trademark embossed on it. In addition, more style conscious people wish to personalise their telephones and the cover can be replaced with one of a different colour much more easily than part of the casing itself.

The cover is attached to a conventional mobile telephone using adhesive, for example, double sided adhesive tape, or resilient clips moulded integrally with the cover that engage in corresponding recesses in the casing. It will be apparent that it is often desirable to remove the cover to obtain access to the region of the casing beneath it, or to replace it. However, the cover is difficult to remove and this is normally achieved by inserting a tool such as a screwdriver or other thin blade between the cover and the casing to which it is attached. Once the tool has been inserted between the two components, the cover is then levered off the casing. A disadvantage with this arrangement is that the casing can be easily damaged or, at the very least, badly scratched so that it must also be replaced.

According to the present invention, there is provided a housing assembly for an electronic apparatus including first and second housing portions for connection to each other and a release member positionable in a recess in the first housing portion, said release member including cam means that protrudes from the recess on rotation of the release member to engage the second housing portion and separate the second housing portion from the first housing portion.

In a preferred embodiment, the cam means is configured so that progressively more of it protrudes from the recess as the release member is rotated.

Preferably, the release member includes attachment means for releasably mounting it to the first housing portion, the first housing portion including means for receiving the attachment means on the release member.

The attachment means preferably comprises a lug on the release member and the means for receiving the lug includes an opening in the first housing portion shaped to receive the lug, the lug engaging the first housing portion to mount the release member thereto on rotation of the release member after insertion of the lug through the opening.

Preferably, the cam means protrudes from the recess to force the first and second housing portions apart when the release member is rotated back to the orientation in which it was inserted.

In a preferred embodiment, the opening is located in the base of the recess.

A resilient compressible washer is advantageously located in the recess against the base and, most preferably, the underside of the base includes a plurality of dimples thereon, the lugs passing over the dimples when the release member is rotated to releasably mount it to the first housing portion.

In a preferred embodiment the release member is configured such that the lugs clear the dimples when the release member is pushed downwardy to compress the washer before rotating the release member to attach it to the first housing portion, the resilience of the washer biasing the lugs into contact with the base when the force is removed, the dimples preventing further rotation of the release member.

Conveniently, the cam means is a flange on the release member having an angled cam surface for engagement with the second housing portion on rotation of the release member.

The cam surface is preferably annular and the release member includes a cylindrical portion extending from the flange.

In one embodiment, an aperture is formed in the cover, the diameter of the aperture being substantially equal to the diameter of the cylindrical portion so that the cylindrical portion is received in the aperture when the second housing portion is placed over the first housing portion and the cam surface.

A boss conveniently protrudes from the cylindrical portion of the release member and has an aperture therethrough to receive a wrist strap.

In the most preferable embodiment, the housing assembly comprises a mobile telephone.

According to the invention, there is also provided a method of separating two housing portions in a housing assembly according to the invention, comprising the steps of rotating the release member such that the cam means protrudes from the recess and lifts the second housing portion from the first housing portion.

An embodiment of the invention will now be described, by way of example only, with reference to the accompanying drawings, in which:
FIGURE 1 is a schematic illustration of a preferred embodiment of the invention in which the electronic device is a mobile telephone;
FIGURE 2 illustrates the main components of the telephone shown in Figure 1 for connection to a cellular or cordless telephone network;
FIGURE 3 illustrates a rear view of the telephone shown in Figure 1 with the cover removed;
FIGURE 4 illustrates a partial enlarged view of the rear of the telephone shown in Figure 3 with the cover in place;
FIGURE 5 illustrates a perspective view of the release member incorporating a wrist strap fixing loop;
FIGURE 6 illustrates a partial enlarged perspective view of the rear of the telephone shown in Figure 3;
FIGURE 7 illustrates a partial enlarged perspective view of the other side of the rear of the telephone casing shown in Figure 3 and in Figure 6;
FIGURE 8 illustrates a partial enlarged perspective view of rear of the telephone casing shown in Figure 7, but with the release member shown in its locked position; and
FIGURE 9 illustrates a partial enlarged sectional view through the casing showing the release member in its locked position therein.

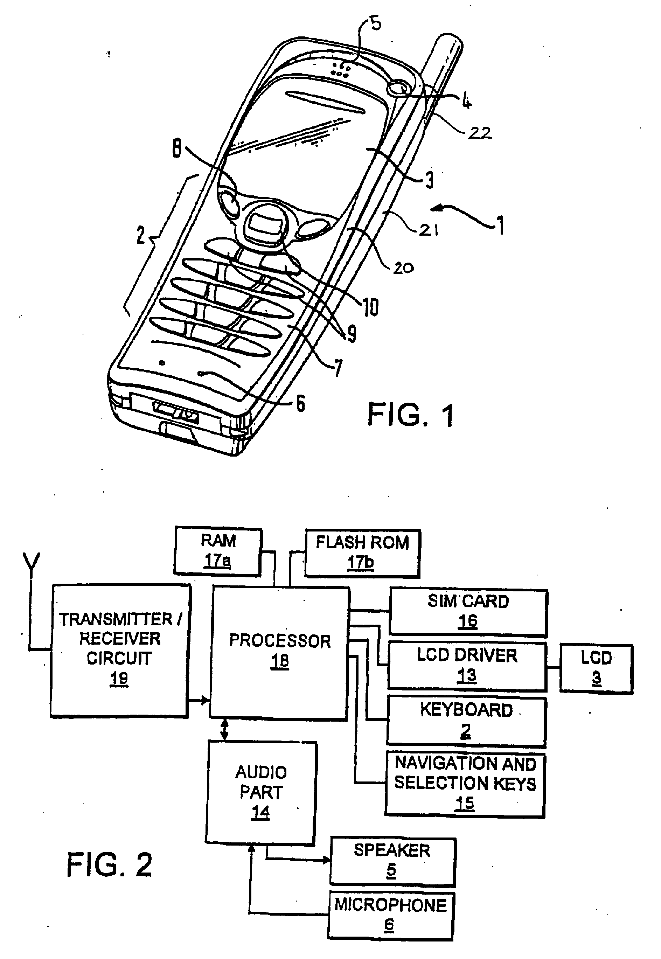

A preferred embodiment of the electronic apparatus according to the invention is a mobile telephone 1 as illustrated in Figure 1. The telephone comprises a user interface having a keypad 2, a display 3, an on/off button 4, ear piece 5 and a microphone 6. The telephone is adapted for communication via a wireless telecommunication network, e.g. a cellular network. However, the telephone could also have been designed for a cordless network. The keypad 2 has a first group of keys 7 which are alphanumeric and by means of which a user can enter a telephone number, write a text message (SMS), write a name associated with a telephone number, etc. Each of the twelve alphanumeric keys 7 is provided with a figure "0-9" or a sign "#" or "*", respectively. In alpha mode, each key 7 is associated with a number of letters and special signs used in text editing.

The keypad 2 additionally comprises two soft keys 8, the functionality of which depends on the state of the telephone and the navigation in the menu by means of a navigation key 10, and two call handling keys 9, which can be used for establishing a call or a conference call, terminating a call or rejecting an incoming call.

Figure 2 illustrates the main parts of the telephone 1 which is adapted for use in connection with a GSM network or any other telephone network. The telephone 1 may also configured to meet the wireless application protocol specification (WAP) agreed by most of the major telephone manufacturers and service providers that enables the telephone 1 to be used to access the internet. The microphone 6 produces analog electric signals corresponding to the user's speech and the analog signals are A/D converted in an A/D converter in the audio part 14. The digital speech signals are further encoded in the audio part 14 and transferred to a controller or processor 18 which forms an interface between peripheral components of the device, including a RAM memory 17a and a Flash ROM memory 17b, a SIM card 16, the display 3 and the keypad 2. The controller 18 communicates with a transmitter/receiver circuit 19. The audio part 14 also decodes digital speech signals which are transferred from the controller 18 to the speaker 5, via a D/A converter. The controller 18 is also connected to the keypad 2 and monitors the status of the telephone 1. If the status of the telephone 1 changes in response to, for example, a user activating a button on the keypad 2, the change is detected by the controller 18 and an indication of the change is shown on the display 3.

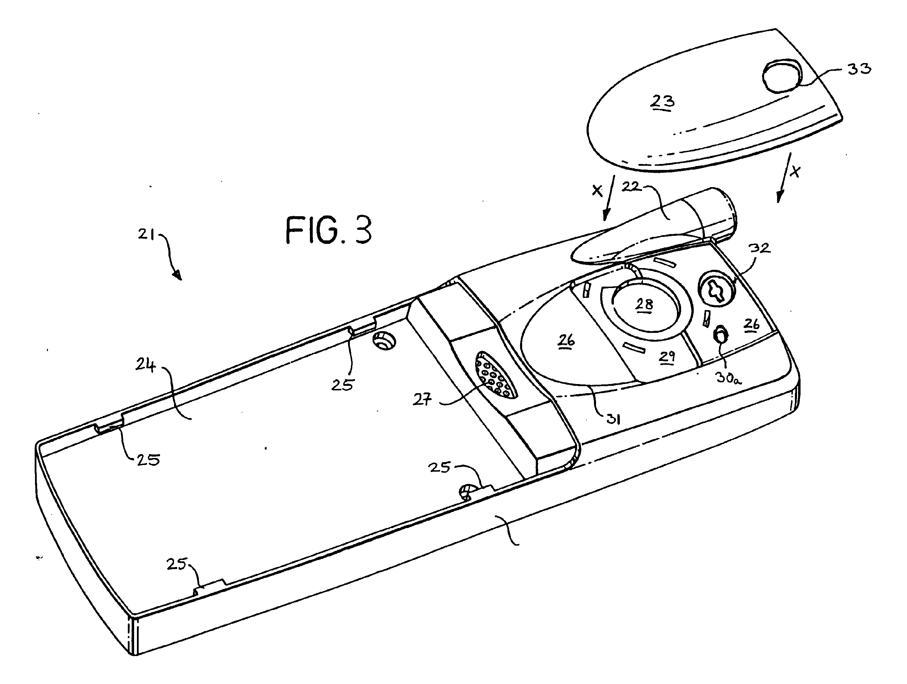

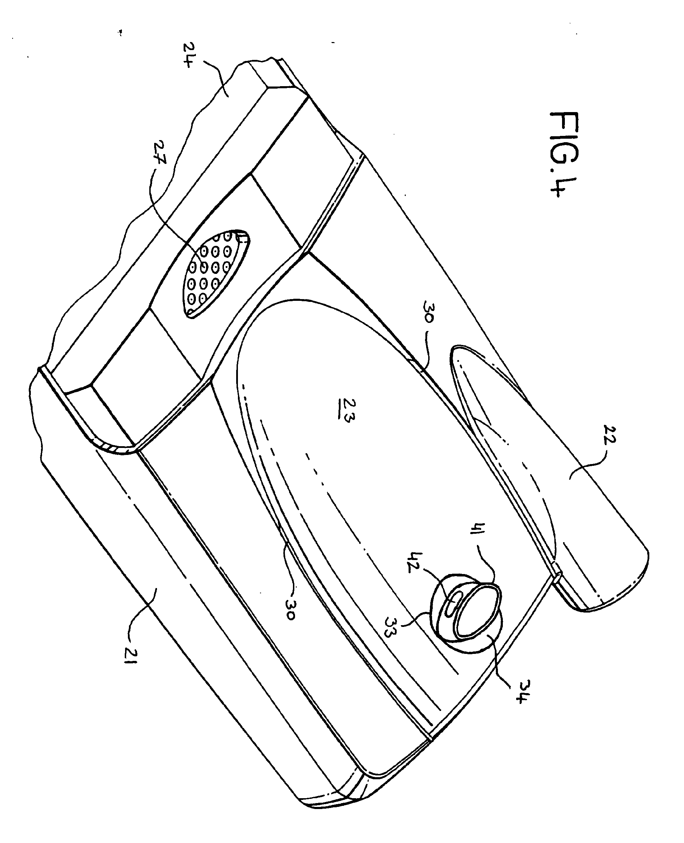

The telephone 1 has a housing formed from three main components, a front casing 20, a rear casing 21 and a cover 23. The rear casing includes an integrally moulded cylindrical portion 22 through which the antenna of the telephone may extend. As shown in Figures 3 and 4, the cover 23 is attached to a portion of the upper region 26 of the rear casing 21 which also has a battery chamber 24 to which a battery (not shown) together with a battery chamber cover may be attached. The battery chamber cover includes means by which it co-operates with the rear casing 21 using the integrally moulded clips 25 and the detent 27 on the casing 21 so as to releasably attach it thereto.

The portion 26 of the upper region of the casing over which the cover 23 is fitted is raised or slightly outwardly bulbous in shape and the cover 23 is correspondingly shaped to fit over the portion 26 so that the underside of the cover 23 is in contact with the casing 21 when fitted thereto in the direction of arrow X in Figure 3. As is shown in Figure 3, the portion 26 of the casing 21 in the region of the cover 23 has an aperture 28 therethrough for the transmission of sound through the casing 21 from a transducer (not shown) mounted on the other side of the casing 21 over the aperture 28. A depression or recess 29 extends across the portion 26 and, together with the cover 23, forms an acoustic duct for the transmission of sound to the outside via narrow openings 30 where the cover and the casing meet in the region of the recess 29. An opening 30a in the casing 21 in the portion 26 is also provided to enable access to be obtained to the RF test point when the cover 23 is removed. Additionally, holes for the passage of screws for attaching the front and rear casings 20,21 together may also be provided in the portion 26 beneath the cover 23 so that they are concealed from view for aesthetic reasons when the cover 26 is in place, although for clarity no screw holes are visible in the accompanying drawings.

The cover 23 may be clipped to the casing 21. However, in the present embodiment no clips are shown and the cover 23 is attached to the casing 21 using adhesive. The edge 31 of the portion 26 of the casing 21 may be lower than the surface of the casing 21 to define a shoulder against which the cover 23 locates so that the edge of cover 23 is flush with the casing 21 when attached thereto.

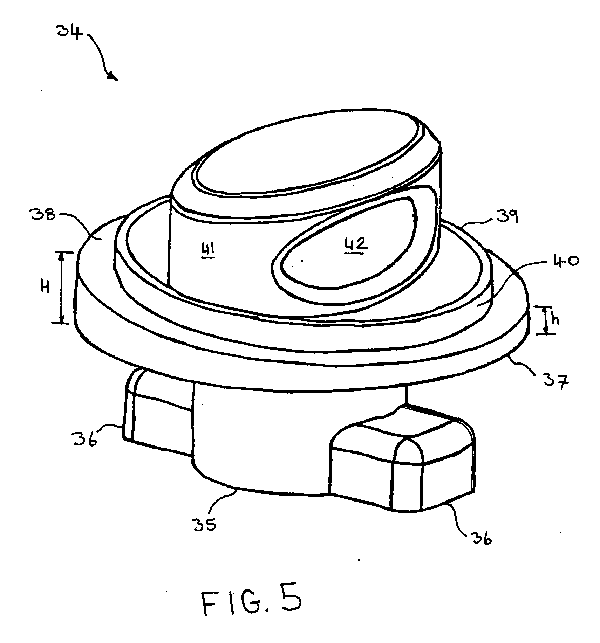

A circular recessed area 32 in the portion 26 of the casing 21 is visible in Figure 3 and receives a release member 34 (omitted from Figure 3 but shown in Figure 4 and 5), that protrudes through an aperture 33 in the cover 23 located directly above the recessed area 32. The release member 34 and the recessed area 32 of the casing 21 will now be explained with reference, in particular, to Figures 5 to 9.

The release member 34 is shown in Figure 5 and comprises a shaft portion 35 having a pair of diametrically opposite locking lugs 36 extending perpendicularly therefrom at its lower end. The other end of the shaft 35 is provided with a circular flange 37 which reduces in thickness from a maximum height H to a minimum height h as shown in the Figure. The overall diameter of this flange 37 is equal to, or slightly less than, the diameter of the recess 32 in the casing 21. The upper surface of the flange 37 defines an angled cam surface 38 and its function will be explained in more detail later. A cylindrical portion 39 extends from the flange 37 and its walls define a shoulder 40 on the flange 37 having a height substantially equal to the thickness of the cover 23. The angled cam surface is annular in shape. The overall diameter of the cylindrical portion 39 is equal to, or slightly less than the diameter of the aperture 33 in the cover. An elliptical boss 41 upstands from the upper surface of the cylindrical portion 39 an has an aperture 42 therethrough.

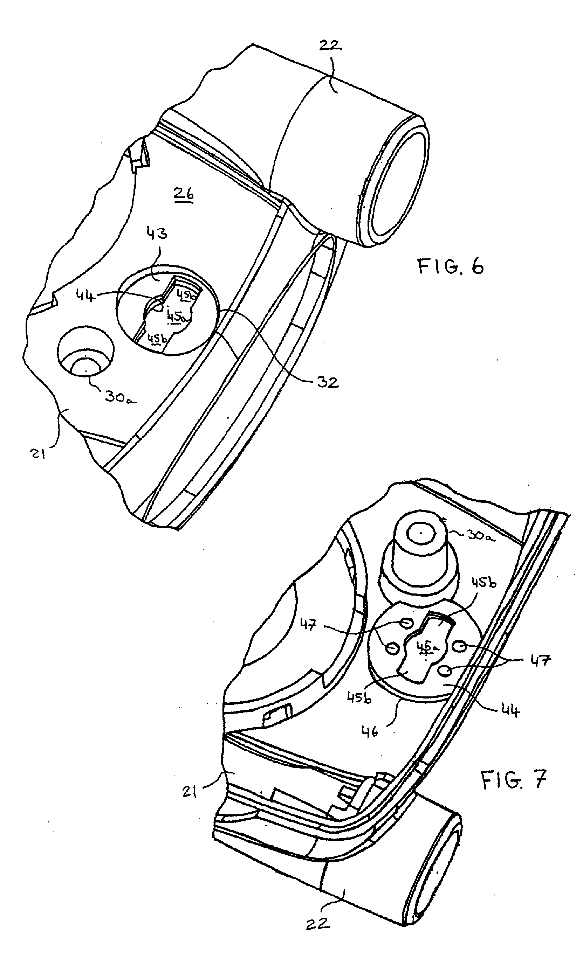

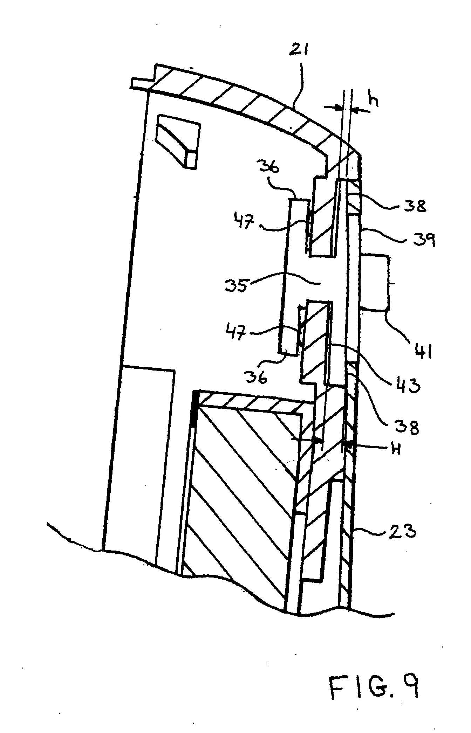

Referring now to Figure 6, the circular recessed area 32 in the casing 21 can be seen in more detail. Due to the outwardly bulbous shape of the portion 26 of the casing 21, the depth of the recess increases from a minimum depth nearest to the edge of the casing to a maximum depth near to the region in which the transducer is mounted to the casing. The maximum and minimum depths of the recess are substantially equal to the heights H and h of the flange 37 of the release member described above, and this can be most clearly seen in the sectional view of Figure 9.

The base 44 of the recess 32 has an opening 45 comprising a part circular portion 45a in the centre of the recess and two elongate openings 45b extending from the part circular portion. A resilient rubber washer 43 is disposed in the recess 32 for reasons that will become apparent and has an identical opening to that of the base 44 of the recess 32.

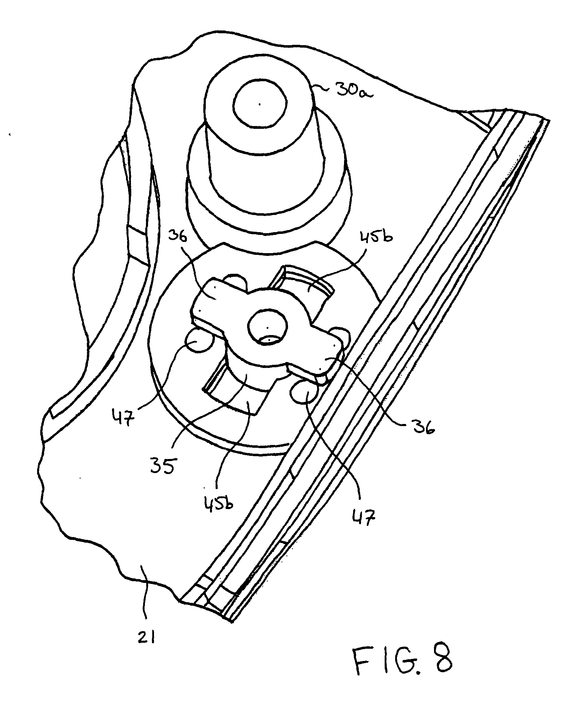

The other side of the casing 21 is shown in Figure 7, and the recess 32 is visible as a boss 46 on this side of the casing. The other side of the base 44 of the recess 32 has four raised dimples or pips 47 formed thereon.

The release member 34 is attached to the casing 21 in the following manner. The release member 34 is oriented so that the shaft 35 passes through the part circular portion 45a in the opening 45 in the centre of the recess 32 and each lug 36 passes through one of the elongate portions 45b extending from the part circular portion 45a. The release member 34 is then rotated 90 degrees to the position shown in Figures 8 and 9 so that the lugs 36 engage with the base 44 of the recess 32 and removal of the release member 34 from the recess 32 is prevented. To positively retain the release member 34 in its rotated or locked position, it must be pushed downwardly against the rubber washer 43 to compress it before the lugs 36 clear the base 44 of the recess 32 so that the release member 34 can be rotated. As it is rotated, the lugs 36 must ride over the pips 47, further compressing the washer 43 before seating between them. It will therefore be appreciated that the release member 34 can only be rotated back to its insertion position once downward pressure has been applied to it sufficient to compress the washer 43 so that the lugs 36 can pass back over the pips 47.

Once the release member 34 has been locked in position as described above, the cover 23 is then glued in position on the portion 26. The underside of the cover 23 seats against the cam surface 38 of the flange 37 and the walls of the aperture 33 in the cover 23 seat against the shoulder 40 of the cylindrical portion 39, so that only the upper surface of the cylindrical portion and the boss 41 are visible once the cover 23 is in place, as can be most clearly seen in Figures 4 and 9.

The aperture 42 in the boss 41 is provided to enable a wrist strap (not shown) to be connected to the release member 34 to enable the telephone 1 to be carried more easily. However, it will be appreciated that this is only a preferred embodiment and the boss 41 need not have an aperture 42 therethrough. In another embodiment, the boss 41 may be removed altogether and, the upper surface of the cylindrical portion 39 may be provided with a slot to enable rotation of the release member 34 using a tool such as a screw driver or a coin or such like.

When the cover 23 is to be separated from the casing 21, the release member 34 is rotated back to the orientation in which it was inserted. To rotate it, a downward pressure must be applied to compress the washer 43 so that the lugs 36 will freely pass over the pips 47, as previously explained. As the release member 34 is rotated, the cam surface 38 which, with the release member 34 in its locked position, is usually flush with or lower than the surface of the region 26 of the casing 21, is forced against the underside of the cover 23, urging it away from the casing 21 and breaking the adhesive or other connection holding the two components together. The cover 23 can then be easily peeled off the casing 21.

It will be appreciated that as the separating force is applied directly to the underside of the cover 23 by the cam surface 38 as the release member 34 is rotated, the cover 23 can be easily separated from the casing 21 to obtain access to the portion 26 beneath the cover 23 or to replace the cover 23 with a new one, without causing any damage to either the cover 23 or the casing 21.

## Claims

1. A housing assembly for an electronic apparatus including first and second housing portions for connection to each other and a release member positionable in a recess in the first housing portion, said release member including cam means that protrudes from the recess on rotation of the release member to engage the second housing portion and separate the second housing portion from the first housing portion.

2. An assembly according to claim 1, wherein the cam means is configured so that progressively more of it protrudes from the recess as the release member is rotated.

3. An assembly according to claim 1 or 2, wherein the release member includes attachment means for releasably mounting it to the first housing portion.

4. An assembly according to claim 3, wherein said first housing portion includes means for receiving the attachment means on the release member.

5. An assembly according to claim 4, wherein the attachment means comprises a lug on the release member and the means for receiving the lug includes an opening in the first housing portion shaped to receive the lug, the lug engaging the first housing portion to mount the release member thereto on rotation of the release member after insertion of the lug through the opening.

6. An assembly according to claim 5, wherein the cam means protrudes from the recess to force the first and second housing portions apart when the release member is rotated back to the orientation in which it was inserted.

7. An assembly according to claim 5 or 6, wherein the opening is located in the base of the recess.

8. An assembly according to claim 7, wherein a resilient compressible washer is located in the recess against the base.

9. An assembly according to claim 8, wherein the underside of the base includes a plurality of dimples thereon, the lugs passing over the dimples when the release member is rotated to releasably mount it to the first housing portion.

10. An assembly according to claim 9, wherein the release member is configured such that the lugs clear the dimples when the release member is pushed downwardy to compress the washer before rotating the release member to attach it to the first housing portion, the resilience of the washer biasing the lugs into contact with the base when the force is removed, the dimples preventing further rotation of the release member.

11. An assembly according to any preceding claim, wherein the cam means is a flange on the release member having an angled cam surface for engagement with the second housing portion on rotation of the release member.

12. An assembly according to claim 11, wherein the cam surface is annular and the release member includes a cylindrical portion extending from the flange.

13. An assembly according to claim 12, wherein an aperture is formed in the cover, the diameter of the aperture being substantially equal to the diameter of the cylindrical portion so that the cylindrical portion is received in the aperture when the second housing portion is placed over the first housing portion and the cam surface.

14. An assembly according to claim 12 or 13, wherein a boss protrudes from the cylindrical portion of the release member.

15. An assembly according to claim 14, wherein the boss has an aperture therethrough to receive a wrist strap.

16. An assembly according to any preceding claim comprising a mobile telephone communications apparatus.

17. An assembly according to claim 16, wherein the first housing portion is a rear case of a mobile telephone housing and the second housing portion is a cover attached to a portion of the rear case of the mobile telephone housing, the telephone also including a front case attached to the rear case.

18. An assembly according to claim 17, wherein the release member is disposed in a recess in the rear case of the mobile telephone housing, the release member being operable to separate the cover from the rear case.

19. A method of separating two housing portions in a housing assembly according to any of claims 1 to 18, comprising the steps of rotating the release member such that the cam means protrudes from the recess and separates the second housing portion from the first housing portion.

20. A housing assembly substantially as hereinbefore described, with reference to the accompanying drawings.
